# FASCICULE DE BREVET EUROPEEN

(11) **EP 3 069 319 B1**
(45) Date de publication et mention de la délivrance du brevet: **04.10.2023**
(21) Numéro de dépôt: 14798878.6
(22) Date de dépôt: 14.11.2014
(51) Int. Cl.: G06T 7/593, G06V 10/25

(54) **SYSTÈME ET UN PROCÉDÉ DE CARACTÉRISATION D'OBJETS D'INTÉRÊT PRÉSENTS DANS UNE SCÈNE**
SYSTEM UND VERFAHREN ZUR CHARAKTERISIERUNG INTERESSIERENDER OBJEKTE IN EINER SZENE
SYSTEM AND METHOD FOR CHARACTERISING OBJECTS OF INTEREST IN A SCENE

(30) Priorité: 15.11.2013 FR 1361213
(43) Date de publication de la demande: 21.09.2016
(73) Titulaire: Idemia Identity & Security France, 92400 Courbevoie (FR)
(72) Inventeur: ROUH, Alain, F-92445 Issy les Moulineaux (FR); LE GOUIL, Elise, F-92445 Issy les Moulineaux (FR); BEAUDET, Jean, F-92445 Issy les Moulineaux (FR)
(74) Mandataire: Idemia
(86) Numéro de dépôt international: PCT/EP2014/074643
(87) Numéro de publication internationale: WO 2015/071426

(56) Documents cités:
- US-A1- 2009 060 280
- JOO KOOI TAN ET AL: "Automatic detection of pedestrians from stereo camera images", ARTIFICIAL LIFE AND ROBOTICS, SPRINGER-VERLAG, TO, vol. 15, no. 4, 31 December 2010 (2010-12-31), pages 459-463, XP019871429, ISSN: 1614-7456, DOI: 10.1007/S10015-010-0843-2

## Description

La présente invention concerne un système et un procédé de caractérisation d'objets d'intérêt présents dans une scène. Par exemple, la scène en question est une portion d'un réseau routier (portion de ligne droite d'une route, carrefour, etc.) et un objet d'intérêt est un véhicule dont on souhaite connaître au moins une caractéristique, telle que sa position dans la scène, son sens de déplacement, sa vitesse, son identification, par exemple son numéro d'immatriculation, etc.

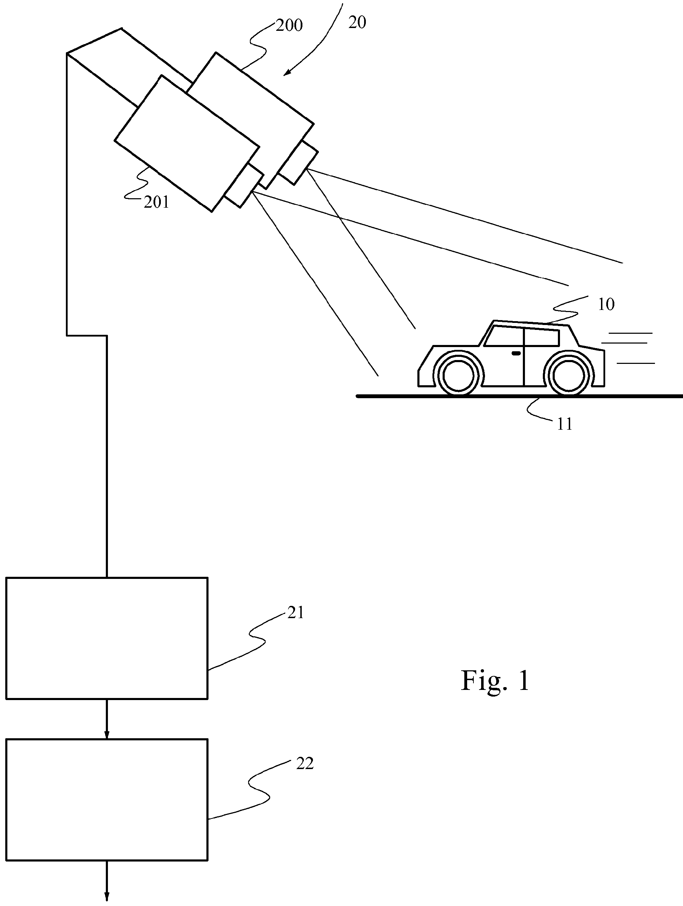

A la Fig. 1, on a représenté un tel système de caractérisation d'objets d'intérêt selon l'état de la technique. Ici, l'objet d'intérêt est une automobile 10 sur une portion de route 11. Le système de caractérisation comprend un système de prise de vues 20 apte à prendre des paires d'images de la scène (en l'occurrence, la portion de route 11) et à délivrer des signaux d'images à des moyens 21 prévus pour déterminer, dans chaque paire d'images ainsi délivrées par le système de prise de vues 20, des zones d'intérêt. Chaque zone d'intérêt correspond à une zone d'une image dont les moyens de détermination 21 ont pu déterminer qu'elle contient l'image d'un élément caractéristique d'un objet d'intérêt ainsi détecté. Par exemple, dans le cas de véhicules en tant qu'objets d'intérêt, l'élément caractéristique en question peut être sa plaque d'immatriculation, laquelle est indentifiable du fait qu'elle est rectangulaire, contient du texte, est fortement contrastée, etc.

Le système de caractérisation comporte encore des moyens de traitement 22 qui, après analyse de la ou des zones d'intérêt précédemment déterminées, déterminent la caractéristique recherchée dudit objet d'intérêt détecté.

Plus précisément, le système de prise de vues 20 comprend deux caméras 200 et 201 qui regardent l'une et l'autre la même scène (ici la portion de route 11) et qui sont espacées l'une de l'autre. Elles constituent un système de prise de vues stéréoscopique, ou binoculaire. Les documents US 2009/060280 A1 et JOO KOOI TAN ET AL: "Automatic détection of pedestrians from stéréo caméra images" (publié dans ARTIFICIAL LIFE AND ROBOTICS, SPRINGER-VERLAG, TO, vol. 15, no. 4, 31 décembre 2010 (2010-12-31), pages 459-463, ISSN: 1614-7456, DOI: 10.1007/S10015-010-0843-2) sont des exemples de systèmes utilisant des caméras stéréoscopiques.

Différents moyens peuvent être utilisés pour déterminer des zones d'intérêt. Par exemple, les moyens 21 de détermination de zones d'intérêt établissent une fenêtre qui balaie chaque image d'une paire d'images délivrées par les caméras 200 et 201, retiennent les positions de ladite fenêtre pour lesquelles celle-ci contient l'image d'un élément caractéristique donné (forme rectangulaire, présence de texte, haut contraste, etc.) et établissent ainsi, dans chaque paire d'images issues des caméras 200 et 201, des zones d'intérêt.

Les moyens de traitement 22 considèrent des points d'image des zones d'intérêt de chaque paire d'images, établissent des correspondances entre des points remarquables d'un même élément caractéristique de chaque image d'une paire d'images, et déterminent, par une méthode dite de stéréoscopie, la position 3D des points réels correspondant à ces points remarquables et appartenant à la partie de chaque objet d'intérêt correspondant à chacune de ces zones d'intérêt. Si ces parties d'objet sont sensées contenir du texte (ce qui peut être le cas d'une plaque d'immatriculation), il est également possible d'appliquer un traitement de reconnaissance de caractères et ainsi lire le texte.

Si des séquences d'images sont prises par les caméras 200 et 201, il est possible de déterminer les positions 3D successives des parties d'objet d'intérêt correspondant aux zones d'intérêt, et ainsi en déduire le sens et la vitesse de défilement de l'objet d'intérêt en question devant les caméras 200 et 201. Généralement, dans le cas également de séquences d'images, les images sont horodatées.

De manière générale, les caractéristiques d'un objet auxquelles fait référence la présente description sont sa position, son sens et sa vitesse de déplacement, son identification, etc.

La précision de mesure des caractéristiques des objets d'intérêt obtenue par ce type de système de caractérisation sera d'autant plus grande qu'est importante la résolution des images prises par le système de prise de vues 20. En effet, plus importante est cette résolution et plus précise sera la localisation des zones d'intérêt déterminées par les moyens de détermination 21 et plus précises seront les analyses réalisées par les moyens de traitement 22. Néanmoins, dans la pratique, les différentes opérations effectuées par les moyens de détermination 21 et les moyens de traitement 22 requièrent des ressources de calcul d'autant plus importantes que la résolution des images traitées est grande.

A cela s'ajoute que même si les opérations effectuées par les moyens de détermination 21 et les moyens de traitement 22 le sont généralement en temps différé, il est des cas où elles sont effectuées en temps réel, ce qui signifie que la caractéristique (par exemple, sa position 3D ou sa vitesse) de l'objet d'intérêt détecté dans la scène doit être déterminée alors que celui-ci est encore dans la scène. Un tel cas peut être celui de la mesure de vitesse pour l'éventuel déclenchement d'un flash de prise de vues en cas d'infraction de vitesse.

Ainsi, dans le cas où les objets en question sont des véhicules, plus la vitesse de ces véhicules est importante et plus le temps affecté au calcul de la caractéristique souhaitée du véhicule doit être court.

Le but de la présente invention est de proposer un système de caractérisation d'objets d'intérêt qui est tel que celui qui vient d'être décrit mais qui nécessite moins de ressources de calcul que ceux de l'état de la technique toutes choses étant égales par ailleurs.

Pour ce faire, la présente invention concerne un système de caractérisation selon la revendication 1.

Selon un premier mode de réalisation, lesdits moyens d'obtention d'au moins une image dans une résolution basse sont constitués de moyens de sous-échantillonnage des images fournies par ledit système de prise de vues.

Selon un autre mode de réalisation, lesdits moyens d'obtention d'au moins une image dans une résolution basse sont constitués d'un système de prise de vues à basse résolution.

La présente invention concerne également un procédé de caractérisation selon la revendication 4.

L'étape de détermination d'au moins une zone d'intérêt consiste avantageusement à déterminer au moins une zone d'intérêt à l'intérieur d'une partie d'au moins deux paires d'images parmi la ou les paires d'images prises à l'étape qui correspond à chaque objet d'intérêt détecté.

Selon une autre caractéristique avantageuse d'un mode de réalisation de la présente invention, ledit procédé comporte une étape d'estimation de caractéristiques d'objets détectés et de tri et élimination d'objets en fonction desdites caractéristiques.

Selon un premier mode de réalisation, ladite étape d'obtention d'au moins une image dans une résolution basse consiste à sous-échantillonner des images prises à l'étape.

Selon un autre mode de réalisation, ladite étape d'obtention d'au moins une image dans une résolution basse consiste à obtenir des images d'un système de prise de vues à basse résolution.

Enfin, la présente invention concerne également un programme inscrit sur un support et destiné à être chargé dans une mémoire d'une unité de traitement d'un système de caractérisation tel que décrit ci-dessus, ledit programme comprenant des instructions ou parties de code pour mettre en oeuvre les étapes d'un procédé de caractérisation d'un objet d'intérêt conforme au procédé précédemment décrit, lorsque ledit programme est exécuté par ladite unité de traitement.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :
La Fig. 1 est un schéma synoptique d'un système de caractérisation d'objets d'intérêt selon l'état de la technique,
La Fig. 2 est un schéma synoptique d'un système de caractérisation d'objets d'intérêt selon un premier mode de réalisation de la présente invention,
La Fig. 3 est un schéma synoptique d'un système de caractérisation d'objets d'intérêt selon un second mode de réalisation de la présente invention,
La Fig. 4 est un diagramme illustrant un procédé de caractérisation d'objets d'intérêt selon un premier mode de réalisation de la présente invention,
La Fig. 5 illustre le déroulement d'un procédé de caractérisation d'objets d'intérêt selon un premier mode de mise en oeuvre,
La Fig. 6 illustre le déroulement d'un procédé de caractérisation d'objets d'intérêt selon un second mode de mise en oeuvre,
La Fig. 7 est un diagramme illustrant un procédé de caractérisation d'objets d'intérêt selon un second mode de réalisation de la présente invention, et
La Fig. 8 est un schéma d'un système informatique prévu pour la mise en oeuvre d'un procédé de caractérisation d'objets d'intérêt selon l'invention.

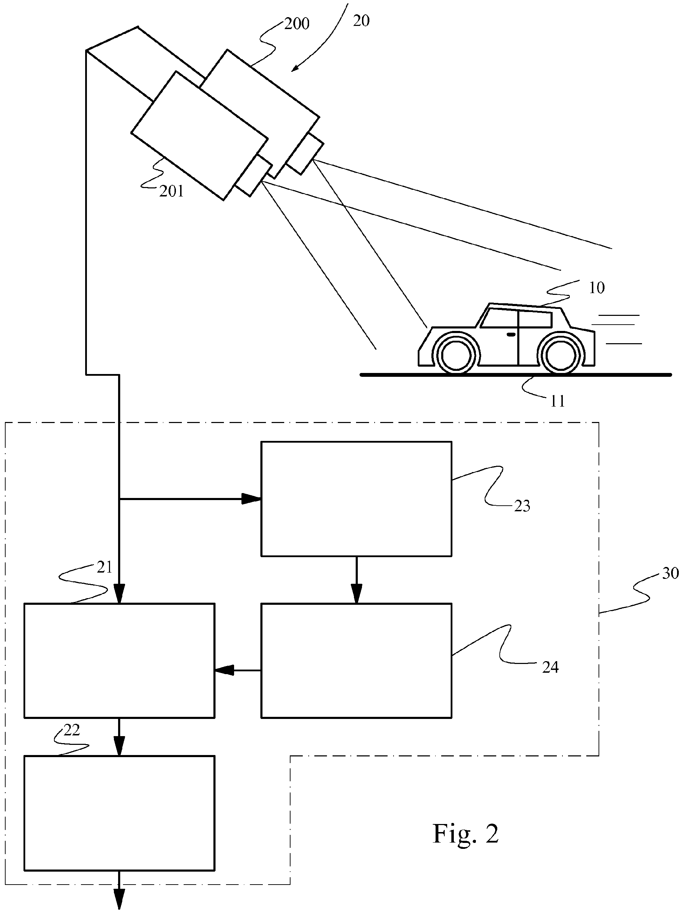

A la Fig. 2, on a représenté un système de caractérisation d'objets d'intérêt selon la présente invention. A l'instar de la Fig. 1, l'objet d'intérêt est une automobile 10 sur une portion de route 11. Le système de caractérisation comprend un système de prise de vues 20 apte à prendre des images de la scène (en l'occurrence, la portion de route 11) et à délivrer des signaux d'image. Dans le mode de réalisation représenté, le système de prise de vues 20 comprend deux caméras 200 et 201 qui regardent l'une et l'autre la même scène (ici la portion de route 11) et qui sont espacées l'une de l'autre. Elles sont dites calibrées dans la mesure où leurs caractéristiques intrinsèques (notamment, focale) et leurs caractéristiques extrinsèques (position par rapport à la scène et position de l'une par rapport à l'autre) sont connues. Elles constituent un système de prise de vues stéréoscopique.

A l'instar de systèmes de caractérisation de l'état de la technique, un système de caractérisation selon l'invention comporte des moyens 21 prévus pour déterminer à partir des paires d'images délivrées par le système de prise de vues 20, des zones d'intérêt.

De même, un système de caractérisation selon l'invention comporte encore des moyens de traitement 22 qui, après analyse de la ou des zones d'intérêt précédemment déterminées, détermine la caractéristique recherchée du ou des dit objets d'intérêt auxquels appartiennent ces zones d'intérêt.

Un système de caractérisation selon l'invention comporte des moyens 23 d'obtention, à partir d'une paire d'images délivrées par le système de prise de vues 20, d'une paire d'images de résolution inférieure à la résolution de la paire d'images délivrées par le système de prise de vues 20. Ces moyens 23 peuvent être constitués de moyens de réduction de résolution, par exemple par sous-échantillonnage, des images de la paire d'images délivrées par le système de prise de vues 20.

Chaque image délivrée par le système de prise de vues 20 est constituée de pixels, chacun caractérisé par un code couleur. Par exemple, le nombre de pixels des images délivrées par le système 20 est 1920x1080. Dans un mode de réalisation, un sous-échantillonnage consiste à former des groupes de pixels voisins (par exemple, des groupes de 6 x 5 pixels) et à affecter à chaque groupe un code couleur qui est fonction des codes couleur des pixels du groupe, par exemple la moyenne des codes couleur. Par exemple, la résolution des images délivrées par les moyens 23 est alors de 320x216. Le rapport entre les résolutions, dans l'exemple donné, est de 30.

Un système de caractérisation selon la présente invention comporte encore des moyens de détection par calcul stéréoscopique d'un objet d'intérêt 24, à partir des paires d'images basse résolution délivrées par les moyens 23.

Par exemple, à partir d'une paire d'images respectivement délivrées par les moyens 23, les moyens de détection 24 établissent une carte de disparité. On rappelle que la disparité représente la différence entre les positions dans les images respectives d'une paire d'images des points image d'un même point réel. Elle est représentative de la profondeur des objets dans la scène. Pour établir cette carte de disparité, les moyens de détection 24 mettent par exemple en oeuvre des méthodes de corrélation entre points dans les images respectives de paires d'images. Ces calculs sont généralement effectués en considérant chacun des points d'une image de la paire d'images et de plusieurs points correspondants appartenant à une fenêtre de l'autre image de la paire. Ils sont dits stéréoscopiques. De cette carte de disparité ainsi déterminée, les moyens de détection 24 peuvent déduire les objets d'intérêt qui sont présents dans la scène.

Ces opérations sont généralement dites denses car elles s'appliquent à tous les pixels des images si bien qu'elles occasionnent des coûts de calcul relativement importants. Dans le cas présent, dans la mesure où ces opérations sont effectuées sur des images à basse résolution, elles peuvent être effectuées avec une puissance de calcul qui ne permettrait pas de réaliser les mêmes opérations avec des images de pleine résolution.

Pour valider que chaque objet ainsi détecté est effectivement un objet d'intérêt, il peut être nécessaire d'appliquer ce processus de détection sur une séquence de paires d'images afin de déterminer la cohérence de cette détection (trajectoire lisse de l'objet détecté, dimensions en rapport à sa disparité au long de la séquence, etc.). Par exemple, un véhicule, outre qu'il présente une forme donnée, se déplace selon une trajectoire sensiblement rectiligne, dans une direction donnée qui est parallèle à la route, etc.

Pour chaque objet d'intérêt ainsi détecté, les moyens de détection 24 délivrent aux moyens de détermination de zones d'intérêt 21 les coordonnées (position, taille, etc.) de cet objet dans une paire d'images délivrées par le système de prise de vues 20.

Contrairement aux moyens de détermination 21 selon l'état de la technique, les moyens 21 selon l'invention ne cherchent pas la ou les zones d'intérêt dans la totalité d'une image, mais seulement dans la partie de celle-ci qui correspond aux coordonnées délivrées par les moyens de détection 24 et pour laquelle il a été préalablement établi qu'elle était représentative d'un objet d'intérêt détecté.

Ils peuvent également chercher la ou les zones d'intérêt dans une sous-partie d'une partie d'une image qui correspond aux coordonnées délivrées par les moyens 24. Par exemple, dans le cas de véhicules en tant qu'objets d'intérêt, une zone d'intérêt peut correspondre à l'image de leur plaque d'immatriculation. La partie d'image qui correspond aux coordonnées délivrées par les moyens de détection 24 est une figure géométrique qui englobe l'image du véhicule. La plaque d'immatriculation peut-être recherchée dans l'ensemble de cette figure géométrique mais aussi seulement dans une partie basse (par exemple, le tiers inférieur) et au centre de cette figure.

Par exemple, les moyens de détection 21 établissent une fenêtre qui balaie les parties ou sous-parties correspondant aux coordonnées délivrées par les moyens de détection 24 et ne retiennent que les positions pour lesquelles celle-ci contient l'image d'un élément caractéristique donné (forme rectangulaire, présence de texte, haut contraste, etc.), ce qui établit les zones d'intérêt.

On notera que les opérations qui sont effectuées par les moyens de détermination 21 sont faites sur la base de paires d'images en haute résolution. Néanmoins, par rapport à l'état de la technique, ces opérations demandent moins de ressources dans la mesure où elles sont effectuées sur un nombre réduit de pixels, ceux qui correspondent aux parties ou sous-parties des objets d'intérêt.

De plus, elles peuvent être réalisées sur un sous-ensemble de paires d'images haute résolution disponibles et, ce, en fonction de caractéristiques estimées sur les paires d'images basse résolution, ce qui permet de diminuer encore la puissance de calcul nécessaire.

Par exemple, les caractéristiques estimées sur les paires d'images basse résolution peuvent être la présence ou non d'un véhicule donné. Le sous-ensemble de paires d'images haute résolution disponibles peut alors être constitué des deux paires d'images haute résolution correspondant à la première et à la dernière des paires d'images basse résolution dans lesquelles le véhicule est présent. Le nombre de paires d'images haute résolution traitées, dans ce cas toujours de deux, est alors indépendant de la vitesse du véhicule, ce qui n'est pas le cas des systèmes de l'art antérieur.

Les moyens de traitement 22 considèrent des points d'image des zones d'intérêt de chaque paire d'images, établissent des correspondances entre des points remarquables d'un même élément caractéristique de chaque image d'une paire d'images, et déterminent, par une méthode dite de stéréoscopie, la position 3D des points correspondant à ces points remarquables et appartenant à la partie de chaque objet d'intérêt correspondant à chacune de ces zones d'intérêt. Cette position 3D peut être précise dans la mesure où, la résolution des zones d'intérêt étant grande (égale à celle des paires d'images issues du système de prise d'images 20) les points d'image utilisés sont finement définis.

Si ces parties d'objet sont censées contenir du texte (ce qui peut être le cas d'une plaque d'immatriculation), il est également possible d'appliquer un traitement de reconnaissance de caractères et ainsi lire le texte.

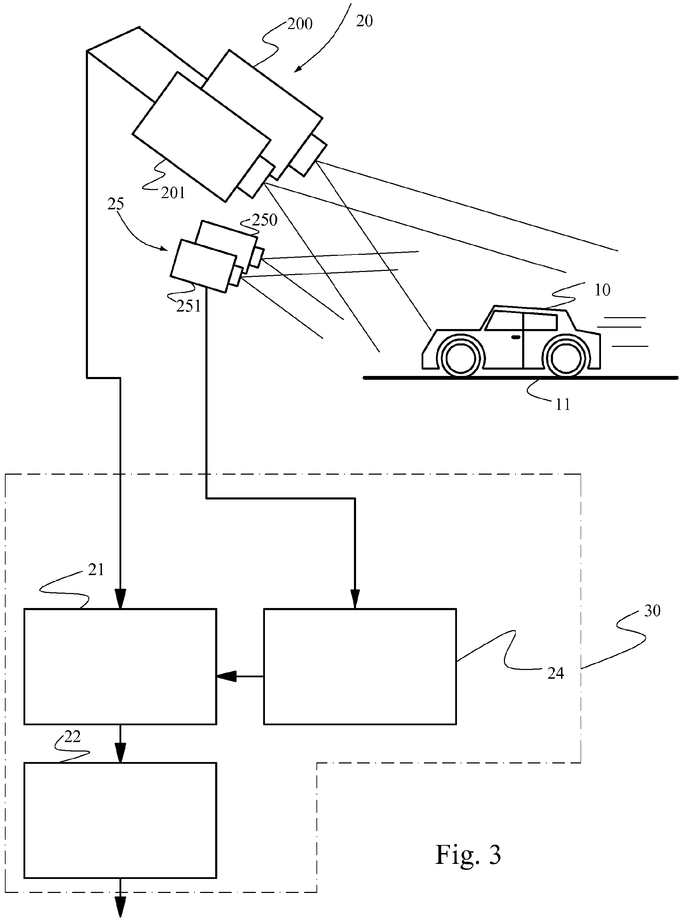

A la Fig. 3, on a représenté un système de caractérisation selon l'invention dans un second mode de réalisation. Les mêmes éléments qu'à la Fig. 2 portent les mêmes références et ne sont pas décrits de nouveau. Dans ce mode de réalisation, les moyens 23 d'obtention d'une paire d'images de résolution inférieure à la résolution de la paire d'images délivrées par le système de prise de vues 20 sont constitués d'un système de prise de vues 25 comportant deux caméras 250 et 251 de basse résolution regardant la scène 11.

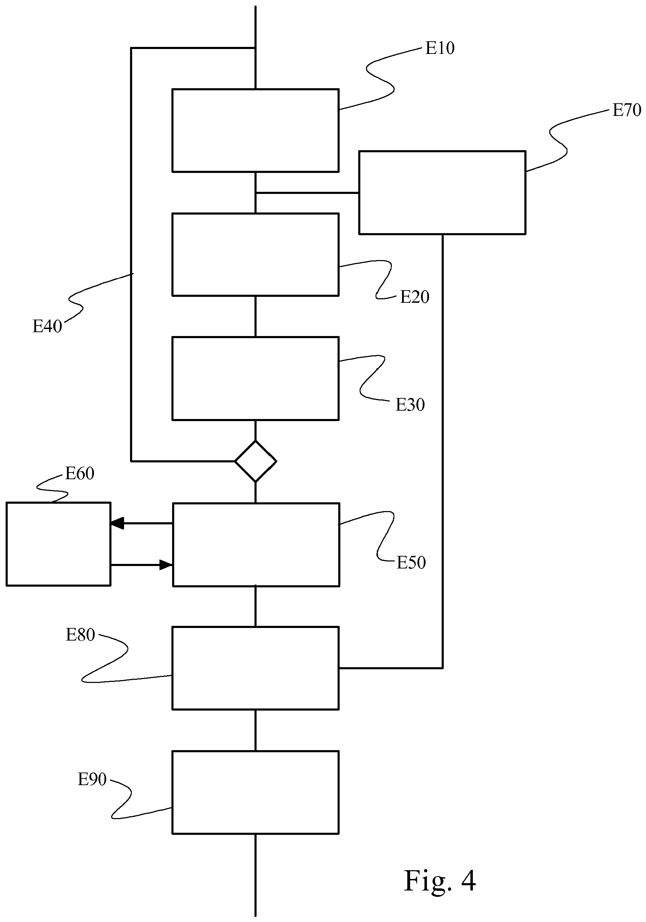

Le diagramme de la Fig. 4 illustre les étapes qui sont mises en oeuvre par un procédé de caractérisation d'objets d'intérêt présents dans une scène selon la présente invention, au moyen d'un système de caractérisation conforme au système de la Fig. 2. Ce procédé comporte une étape E10 de prise de vues au moyen d'un système de prise de vues stéréoscopique, tel que le système 20 de prise de vues représenté à la Fig. 2.

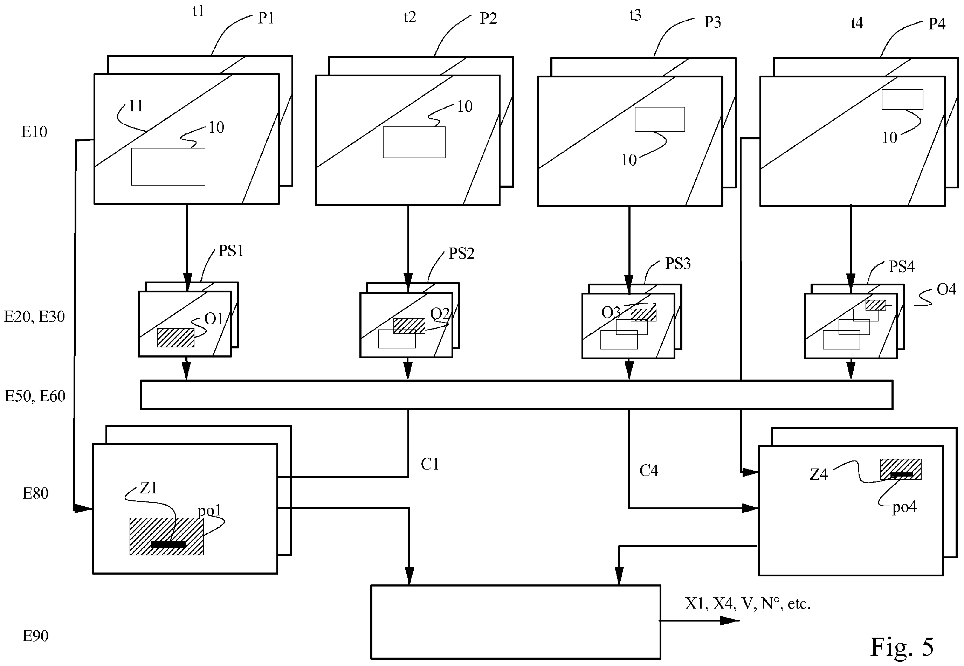

On a représenté à la Fig. 5, à la première ligne, quatre paires d'images P1, P2, P3 et P4 respectivement prises aux temps t1, t2, t3 et t4 par le système de prise de vues 20, conformément à l'étape E10. On peut y voir, sur chacune d'elles, une route 11 sur laquelle roule un véhicule 10 qui s'éloigne du système de prise de vues 20 au fur et mesure des prises de vues.

L'étape E20 est une étape de réduction de résolution, par exemple par sous-échantillonnage, de chacune des images des paires d'images P1 à P4, par exemple réalisée par les moyens 23 de la Fig. 2. A la Fig. 5, à la seconde ligne, on a représenté les quatre paires d'images à résolution réduite PS1, PS2, PS3 et PS4 respectivement obtenues à partir des paires d'images P1, P2, P3 et P4. Le fait que les paires d'images soient de résolution réduite est illustré par des figures plus petites.

L'étape E30 est une étape de détection d'un ou plusieurs objets O1, O2, O3 et O4 dans chaque paire d'images à résolution réduites PS1 à PS4, par exemple mise en oeuvre par les moyens 24 de la Fig. 2. Cette détection est illustrée à la Fig. 5 par des hachures dans les objets détectés O1, O2, O3 et O4 des paires réduites PS1 à PS4.

Ces étapes E10 à E30 sont répétées un nombre N (ici N = 4) prédéterminé de fois. Une boucle E40 est prévue à cet effet dans le diagramme de la Fig. 4.

On notera que le nombre N pourrait être quelconque et, en particulier, égal à 1, signifiant qu'une seule paire d'images est prise par le système de prise de vues 20. Comme on le comprendra par la suite, dans ce cas particulier, il ne sera possible de déterminer que des caractéristiques statiques des objets d'intérêt détectés, par exemple leur position, leur identification, etc. et pas des caractéristiques dynamiques telles que leur sens de déplacement et leur vitesse.

L'étape E50 est une étape de validation des objets détectés et d'extraction de leurs coordonnées.

A la Fig. 5, on a également représenté, dans les paires d'images à basse résolution PS2 à PS4 des temps t2, t3 et t4, les traces des objets détectés aux temps précédents. On peut remarquer que les 4 objets respectivement détectés O1, O2, O3 et O4 sont cohérents en terme de dimensions et trajectoire, si bien qu'ils sont représentatifs d'un même objet, dit alors objet d'intérêt O. Cette opération de vérification de la cohérence entre objets détectés et élimination des objets non-cohérents est celle qui est en oeuvre à l'étape E50.

Pour chaque objet dont la détection est cohérente, l'étape E60 peut également estimer des caractéristiques de celui-ci, telles que sa vitesse de déplacement. Il s'agit là d'estimation dans la mesure où, étant faite à partir de paires d'images à basse résolution, la précision est faible. Néanmoins, ces caractéristiques peuvent être utilisées afin d'opérer des traitements de tri ou d'élimination d'objets parmi les objets détectés.

Par exemple, si la vitesse de déplacement d'un objet estimée par l'étape E60 est bien inférieure à une valeur seuil, les traitements des étapes subséquentes peuvent ne pas être nécessaires et l'objet éliminé.

Dans le cas où la vitesse de déplacement de l'objet en question estimée par l'étape E60 est bien supérieure à une valeur seuil, un flash de vitesse peut être tout de suite déclenché et les traitements des étapes subséquentes de détermination précise de la vitesse du véhicule peuvent être mis en oeuvre en différé.

De même, le traitement des étapes subséquentes pour un objet donné peut devenir prioritaire sur d'autres objets détectés, si la vitesse estimée de cet objet est très supérieure aux vitesses estimées d'autres objets détectés.

Les étapes E50 et E60 sont par exemple mises en oeuvre par les moyens de détection 24.

Dans le cas de détermination de caractéristiques dynamiques, une étape E70 est mise en oeuvre. Il s'agit d'une étape de mémorisation d'au moins deux paires d'images à résolution non réduite respectivement prises à des instants différents, pendant la période de temps séparant leurs prises respectives et leurs traitements subséquents. A la Fig. 5, ce sont les paires d'images prises aux temps t1 et t4 qui sont mémorisées.

Dans le cas de détermination de caractéristiques statiques, l'étape E70 n'est soit pas effectuée, soit est mise en oeuvre sur la paire d'images à haute résolution disponible, notamment dans le cas de calculs différés.

Pour chaque objet qui a été retenu par les étapes E50 et E60, l'étape E50 détermine également ses coordonnées (position, taille, etc.), notamment aux temps où les traitements subséquents seront opérés, en l'occurrence les temps t1 et t4.

L'étape E80 est une étape de détermination de zones d'intérêt, mise en oeuvre par les moyens de détermination 21 de la Fig. 2. Elle est mise en oeuvre sur des parties des images des paires d'images à résolution non-réduite qui correspondent aux coordonnées des objets d'intérêt détectés qui ont été retenus aux étapes E50 et E60. A la Fig. 5, à la troisième ligne, les paires d'images à résolution non-réduite P1 et P4 sont utilisées (ce sont celles qui ont été mémorisées à l'étape E70). Les parties des images des paires d'images P1 et P4 sont les aires hachurées respectivement référencées po1 et po4. Ce sont ces parties po1 et po4 (ou des sous-parties de celles-ci) qui sont analysées pour déterminer les zones d'intérêt respectives Z1 et Z4 (en hachures pleines à la Fig. 5, pour illustrer qu'elles ont été déterminées).

L'étape E90 est une étape de traitement qui, après analyse de la ou des zones d'intérêt déterminées à l'étape E80, détermine la ou les caractéristiques recherchées. Plus précisément, à partir de la localisation de chaque zone Z1, Z4 dans chaque image d'une paire d'images P1, P4, par une méthode stéréoscopique, la position 3D dans la scène des éléments contenus dans chaque zone d'intérêt Z1, Z4 est déterminée.

Connaissant les temps t1 et t4, il est alors possible de déterminer la vitesse moyenne de l'objet O détecté entre ces instants.

Enfin, ayant des images haute définition des zones d'intérêt, il est possible d'analyser les images de ces zones et si celles-ci comportent du texte, comme c'est le cas de plaques d'immatriculation de véhicules, déduire ledit texte et donc le numéro d'immatriculation du véhicule détecté.

Dans certains cas, il sera possible de réaliser les étapes E10 à E60 en temps réels car les traitements de ces étapes E20 à E60 requièrent des ressources très inférieures aux mêmes traitements effectués selon l'état de la technique, dès lors qu'ils sont effectués sur des paires d'images de résolution réduite.

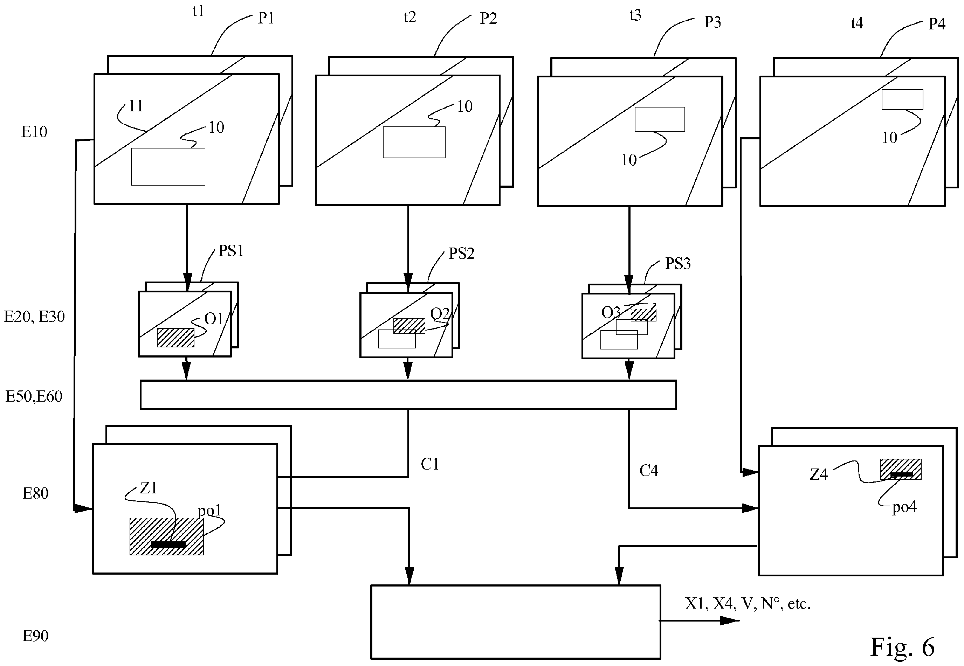

A la Fig. 6, on a illustré une variante de réalisation selon laquelle l'étape E50 estime de plus la trajectoire d'un objet détecté et prédit (par interpolation/extrapolation de la position 3D et reprojection dans l'image) ses coordonnées à un temps t4, lesquelles sont utilisées à l'étape E80 comme précédemment.

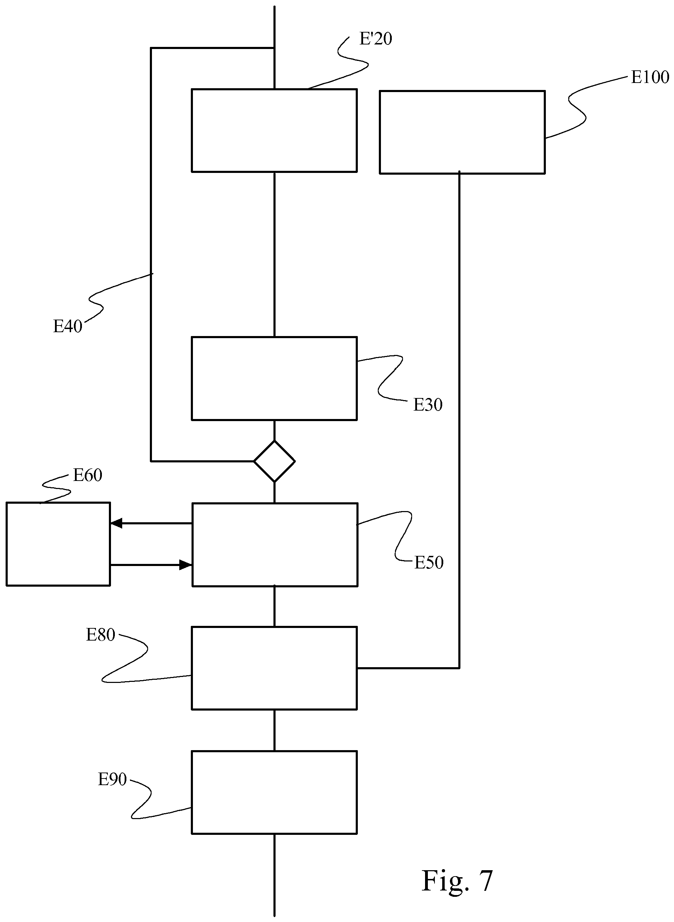

A la Fig. 7, est illustrée une variante d'un procédé de caractérisation d'objets d'intérêt déjà décrit en relation avec la Fig. 4, dans laquelle deux paires de caméras sont utilisées, l'une pour la prise de vues en haute résolution, l'autre en basse résolution. Les étapes déjà décrites en relation avec la Fig. 4 portent les mêmes références et ne sont pas de nouveau décrites.

Ce procédé de caractérisation est mis en oeuvre au moyen du système de caractérisation décrit en relation avec la Fig. 3. L'étape E100 est une étape de prise de vues stéréoscopique à haute résolution et l'étape E'20 est une étape de prise de vues stéréoscopique à plus basse résolution. Comme cela est compréhensible d'après les Figs. 5 et 6, le nombre de prises à haute résolution sera en général inférieur au nombre de prises à basse résolution. Par exemple, deux prises en haute résolution peuvent être effectuées : l'une au temps t1, l'autre au temps t4 (voir Fig. 5 ou Fig. 6).

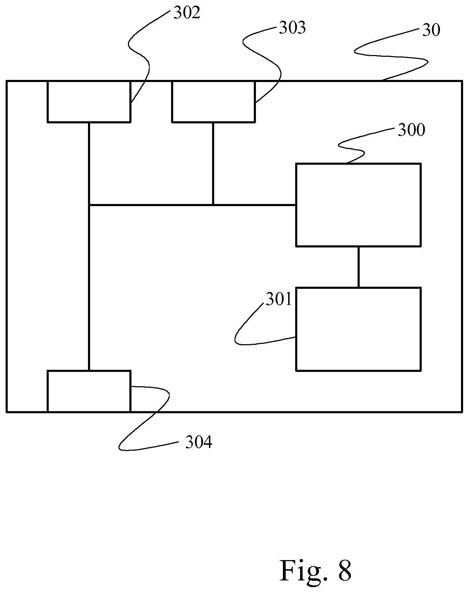

Un procédé de caractérisation selon la présente invention est mis en oeuvre par une unité de commande telle que l'unité de commande 30 de la Fig. 2 ou celle de la Fig. 3. Avantageusement, les moyens 21 à 24 de cette unité de commande 30 sont mis en oeuvre au moyen d'un système informatique tel que celui qui est schématisé à la Fig. 8.

Ce système informatique comprend une unité centrale 300 associée à une mémoire 301 dans laquelle sont mémorisés, d'une part, le code des instructions d'un programme exécuté par l'unité centrale 300 et, d'autre part, des données servant à l'exécution dudit programme. Il comporte encore un port 302 pour l'interfaçage avec un système de prise de vues tel que celui représenté sous la référence 20 aux Figs. 2 et 3, éventuellement un port 303 pour l'interfaçage avec un système de prise de vues à basse résolution tel que celui représenté sous la référence 25 à la Fig. 3 et un port 304 pour l'interfaçage avec une interface homme/machine (non représentée). Selon l'invention, lorsque l'unité centrale 300 exécute le programme dont le code des instructions est contenu dans la mémoire 301, elle met en oeuvre un procédé de caractérisation tel que celui qui a été décrit en relation avec la Fig. 4 ou la Fig. 7.

Un procédé de caractérisation selon la présente invention est mis en oeuvre par une unité de commande telle que l'unité de commande 30 de la Fig. 2 ou celle de la Fig. 3. Avantageusement, les moyens 21 à 24 de cette unité de commande 30 sont mis en oeuvre au moyen d'un système informatique tel que celui qui est schématisé à la Fig. 8.

Ce système informatique comprend une unité centrale 300 associée à une mémoire 301 dans laquelle sont mémorisés, d'une part, le code des instructions d'un programme exécuté par l'unité centrale 300 et, d'autre part, des données servant à l'exécution dudit programme. Il comporte encore un port 302 pour l'interfaçage avec un système de prise de vues tel que celui représenté sous la référence 20 aux Figs. 2 et 3, éventuellement un port 303 pour l'interfaçage avec un système de prise de vues à basse résolution tel que celui représenté sous la référence 25 à la Fig. 3 et un port 304 pour l'interfaçage avec une interface homme/machine (non représentée). Selon l'invention, lorsque l'unité centrale 300 exécute le programme dont le code des instructions est contenu dans la mémoire 301, elle met en oeuvre un procédé de caractérisation tel que celui qui a été décrit en relation avec la Fig. 4 ou la Fig. 7.

## Revendications

1. Système de caractérisation d'objets d'intérêt présents dans une scène, ledit système comprenant :
- un premier système de prise de vues stéréoscopique (20) pour prendre une séquence temporelle de paires d'images (P1, P2, P3, P4) d'un objet d'intérêt (10) présent dans ladite scène,
- des moyens (21) de détermination d'au moins une zone d'intérêt (Z1, Z4) dans au moins une des paires d'images prises par ledit premier système de prise de vues stéréoscopique (20),
- des moyens (22) de traitement de la ou chaque zone d'intérêt ainsi déterminée afin de caractériser l'objet d'intérêt lui correspondant,
comportant en outre :
- des moyens (23) d'obtention d'une séquence temporelle de paires d'images (PS1, PS2, PS3, PS4) dans une résolution, dite basse résolution, inférieure à la résolution, dite haute résolution, des paires d'images (P1, P2, P3, P4) prises par ledit premier système de prise de vues stéréoscopique (20),
- des moyens (24) de détection par calcul stéréoscopique d'un objet d'intérêt (O1, 02, 03, O4) dans chacune des paires d'images basse résolution (PS1, PS2, PS3, PS4) et de détermination des coordonnées desdits objets d'intérêt ainsi détectés, lesdits moyens (24) de détection étant configurés pour déterminer que les objets d'intérêt ainsi détectés (O1, O2, O3, O4) sont représentatifs d'un même objet par vérification de la cohérence de dimensions et de trajectoire entre lesdits objets d'intérêt ainsi détectés et pour éliminer les objets d'intérêt ainsi détectés non-cohérents,
lesdits moyens de détermination (21) déterminant ladite au moins zone d'intérêt seulement à l'intérieur d'une sous-partie des paires d'images haute résolution prises par ledit premier système de prise de vues stéréoscopique (20), ladite sous-partie correspondant aux coordonnées des objets d'intérêt détectés cohérents par lesdits moyens de détection (24).

2. Système de caractérisation selon la revendication 1, **caractérisé en ce que** lesdits moyens d'obtention (23) de la séquence temporelle de paires d'images (PS1, PS2, PS3, PS4) dans la résolution basse sont constitués de moyens de sous-échantillonnage des images fournies par ledit premier système de prises de vues stéréoscopique (20).

3. Système de caractérisation selon la revendication 1, **caractérisé en ce que** lesdits moyens d'obtention (23) de la séquence temporelle de paires d'images (PS1, PS2, PS3, PS4) dans la résolution basse sont constitués d'un second système de prise de vues stéréoscopique (25) à basse résolution.

4. Procédé de caractérisation d'objets d'intérêt présents dans une scène, ledit procédé comprenant :
- une étape E10 pour prendre une séquence temporelle de paires d'images (P1, P2, P3, P4) d'un objet d'intérêt (10) présent dans ladite scène avec un premier système de prise de vues stéréoscopique,
- une étape E80 pour déterminer au moins une zone d'intérêt (Z1, Z4) dans au moins une des paires d'images prises à l'étape E10,
- une étape E90 de traitement de ladite ou de chaque zone d'intérêt ainsi déterminée à l'étape E80 afin de caractériser l'objet d'intérêt lui correspondant,
comportant en outre :
- une étape E20 d'obtention d'une séquence temporelle de paires d'images (PS1, PS2, PS3, PS4) dans une résolution, dite basse résolution, inférieure à la résolution, dite haute résolution, des paires d'images (P1, P2, P3, P4) prises à l'étape E10,
- une étape E30 de détection d'un objet d'intérêt (O1, O2, O3, O4) dans chacune des paires d'image basse résolution (PS1, PS2, PS3, PS4) et de détermination des coordonnées des objets d'intérêt ainsi détectés,
- une étape E50 de détermination que les objets d'intérêt détectés (O1, O2, O3, O4) à l'étape E30 sont représentatifs d'un même objet par vérification de la cohérence de dimensions et de trajectoire entre lesdits objets d'intérêt détectés et d'élimination des objets d'intérêt détectés non-cohérents ;
ladite étape E80 déterminant ladite au moins zone d'intérêt seulement à l'intérieur d'une sous-partie des paires d'images haute résolution, ladite sous-partie correspondant aux coordonnées des objets d'intérêt détectés cohérents à l'étape E50.

5. Procédé de caractérisation selon la revendication 4, **caractérisé en ce que** l'étape E80 consiste à déterminer au moins une zone d'intérêt à l'intérieur d'une partie d'au moins deux paires d'images parmi les d'images prises à l'étape E10 qui correspond à chaque objet d'intérêt détecté.

6. Procédé de caractérisation selon une des revendications 4 à 5, **caractérisé en ce qu'**il comporte une étape E60 d'estimation de caractéristiques d'objets détectés et de tri et élimination d'objets en fonction desdites caractéristiques.

7. Procédé de caractérisation selon une des revendications 4 à 6, **caractérisé en ce que** ladite étape E20 à sous-échantillonner des images prises à l'étape E10.

8. Procédé de caractérisation selon une des revendications 4 à 6, **caractérisé en ce que** les paires d'images dans une résolution basse sont obtenues (E20) par un second système de prise de vues stéréoscopique à basse résolution.

9. Programme inscrit sur un support et destiné à être chargé dans une mémoire d'une unité de traitement d'un système de caractérisation selon une des revendications 1 à 3, ledit programme comprenant des instructions ou parties de code pour mettre en oeuvre les étapes d'un procédé de caractérisation d'un objet d'intérêt selon une des revendications 4 à 8, lorsque ledit programme est exécuté par ladite unité de traitement.

## Patentansprüche

1. System zur Charakterisierung interessierender Objekte in einer Szene, wobei das System Folgendes beinhaltet:
- ein erstes stereoskopisches Aufnahmesystem (20), um eine zeitliche Folge von Bildpaaren (P1, P2, P3, P4) eines interessierenden Objekts (10) in der Szene aufzunehmen,
- Mittel (21) zum Bestimmen mindestens eines interessierenden Bereichs (Z1, Z4) in mindestens einem der durch das erste stereoskopische Aufnahmesystem (20) aufgenommenen Bildpaare,
- Mittel (22) zum Verarbeiten des oder jedes so bestimmten interessierenden Bereichs, um das ihm entsprechende interessierende Objekt zu charakterisieren,
ferner umfassend:
- Mittel (23) zum Erhalten einer zeitlichen Folge von Bildpaaren (PS1, PS2, PS3, PS4) mit einer Auflösung, als niedrige Auflösung bezeichnet, die kleiner ist als die Auflösung, als hohe Auflösung bezeichnet, der durch das erste stereoskopische Aufnahmesystem (20) aufgenommenen Bildpaare (P1, P2, P3, P4),
- Mittel (24) zum Detektieren, durch stereoskopische Berechnung, eines interessierenden Objekts (O1, O2, O3, O4) in jedem der Bildpaare mit niedriger Auflösung (PS1, PS2, PS3, PS4) und zum Bestimmen der Koordinaten der so detektierten interessierenden Objekte, wobei die Detektionsmittel (24) dazu konfiguriert sind, zu bestimmen, dass die so detektierten interessierenden Objekte (O1, O2, O3, O4) für ein gleiches Objekt repräsentativ sind, indem sie die Übereinstimmung von Maßen und Bewegungsverlauf der so detektierten interessierenden Objekte überprüfen, und die so als nicht übereinstimmend detektierten interessierenden Objekte zu eliminieren,
wobei die Bestimmungsmittel (21) den mindestens einen interessierenden Bereich nur innerhalb eines Teilabschnitts der Bildpaare mit hoher Auflösung, die durch das erste stereoskopische Aufnahmesystem (20) aufgenommen werden, bestimmen, wobei der Teilabschnitt den Koordinaten der durch die Detektionsmittel (24) als übereinstimmend detektierten interessierenden Objekte entspricht.

2. Charakterisierungssystem nach Anspruch 1, **dadurch gekennzeichnet, dass** die Mittel (23) zum Erhalten der zeitlichen Folge von Bildpaaren (PS1, PS2, PS3, PS4) mit der niedrigen Auflösung aus Mitteln zur Unterabtastung der Bilder, die durch das erste stereoskopische Aufnahmesystem (20) geliefert werden, bestehen.

3. Charakterisierungssystem nach Anspruch 1, **dadurch gekennzeichnet, dass** die Mittel (23) zum Erhalten der zeitlichen Folge von Bildpaaren (PS1, PS2, PS3, PS4) mit der niedrigen Auflösung aus einem zweiten stereoskopischen Aufnahmesystem (25) mit niedriger Auflösung bestehen.

4. Verfahren zur Charakterisierung interessierender Objekte in einer Szene, wobei das Verfahren Folgendes beinhaltet:
- einen Schritt E10 zum Aufnehmen einer zeitlichen Folge von Bildpaaren (P1, P2, P3, P4) eines interessierenden Objekts (10) in der Szene mit einem ersten stereoskopischen Aufnahmesystem,
- einen Schritt E80 zum Bestimmen mindestens eines interessierenden Bereichs (Z1, Z4) in mindestens einem der in Schritt E10 aufgenommenen Bildpaare,
- einen Schritt E90 des Verarbeitens des oder jedes so in Schritt E80 bestimmten interessierenden Bereichs, um das ihm entsprechende interessierende Objekt zu charakterisieren,
ferner umfassend:
- einen Schritt E20 des Erhaltens einer zeitlichen Folge von Bildpaaren (PS1, PS2, PS3, PS4) mit einer Auflösung, als niedrige Auflösung bezeichnet, die kleiner ist als die Auflösung, als hohe Auflösung bezeichnet, der in Schritt E10 aufgenommenen Bildpaare (P1, P2, P3, P4),
- einen Schritt E30 des Detektierens eines interessierenden Objekts (O1, O2, O3, O4) in jedem der Bildpaare mit niedriger Auflösung (PS1, PS2, PS3, PS4) und des Bestimmens der Koordinaten der so detektierten interessierenden Objekte,
- einen Schritt E50 des Bestimmens, dass die in Schritt E30 detektierten interessierenden Objekte (O1, O2, O3, O4) für ein gleiches Objekt repräsentativ sind, indem die Übereinstimmung von Maßen und Bewegungsverlauf der detektierten interessierenden Objekte überprüft wird, und des Eliminierens der als nicht übereinstimmend detektierten interessierenden Objekte;
wobei Schritt E80 den mindestens einen interessierenden Bereich ausschließlich innerhalb eines Teilabschnitts der Bildpaare mit hoher Auflösung bestimmt, wobei der Teilabschnitt den Koordinaten der in Schritt E50 als übereinstimmend detektierten interessierenden Objekte entspricht.

5. Charakterisierungsverfahren nach Anspruch 4, **dadurch gekennzeichnet, dass** Schritt E80 darin besteht, mindestens einen interessierenden Bereich innerhalb eines Abschnitts von mindestens zwei Bildpaaren aus den in Schritt E10 aufgenommenen Bildpaaren zu bestimmen, der jedem detektierten interessierenden Objekt entspricht.

6. Charakterisierungsverfahren nach einem der Ansprüche 4 bis 5, **dadurch gekennzeichnet, dass** es einen Schritt E60 des Bewertens von Eigenschaften von detektierten Objekten und des Sortierens und Eliminierens von Objekten in Abhängigkeit von den Eigenschaften umfasst.

7. Charakterisierungsverfahren nach einem der Ansprüche 4 bis 6, **dadurch gekennzeichnet, dass** Schritt E20 darin besteht, die in Schritt E10 aufgenommenen Bilder zu unterabtasten.

8. Charakterisierungsverfahren nach einem der Ansprüche 4 bis 6, **dadurch gekennzeichnet, dass** die Bildpaare mit einer niedrigen Auflösung durch ein zweites stereoskopisches Aufnahmesystem mit niedriger Auflösung erhalten (E20) werden.

9. Programm, das auf einem Träger aufgezeichnet ist und dazu bestimmt ist, in einen Speicher einer Verarbeitungseinheit eines Charakterisierungssystems nach einem der Ansprüche 1 bis 3 geladen zu werden, wobei das Programm Codeanweisungen oder -abschnitte beinhaltet, um die Schritte eines Verfahrens zur Charakterisierung eines interessierenden Objekts nach einem der Ansprüche 4 bis 8 umzusetzen, wenn das Programm durch die Verarbeitungseinheit ausgeführt wird.

## Claims

1. System for characterizing objects of interest present in a scene, said system comprising:
- a first stereoscopic image-capturing system (20) for capturing a temporal sequence of pairs of images (P1, P2, P3, P4) of an object of interest (10) present in said scene,
- means (21) for determining at least one region of interest (Z1, Z4) in at least one of the pairs of images captured by said first stereoscopic image-capturing system (20),
- means (22) for processing the or each region of interest thus determined in order to characterize the object of interest corresponding thereto,
and further comprising:
- means (23) for obtaining a temporal sequence of pairs of images (PS1, PS2, PS3, PS4) in a resolution, referred to as low resolution, lower than the resolution, referred to as high resolution, of the pairs of images (P1, P2, P3, P4) captured by said first stereoscopic image-capturing system (20),
- means (24) for detecting, via stereoscopic computation, an object of interest (O1, O2, O3, O4) in each of the low-resolution pairs of images (PS1, PS2, PS3, PS4) and for determining coordinates of said objects of interest thus detected, said detecting means (24) being configured to determine that the objects of interest (O1, O2, O3, O4) thus detected are representative of the same object by verifying the consistency in dimensions and in path between said objects of interest thus detected and to remove inconsistent objects of interest thus detected,
said determining means (21) determining said at least one region of interest only inside a sub-portion of the high-resolution pairs of images captured by said first stereoscopic image-capturing system (20), said sub-portion corresponding to the coordinates of consistent objects of interest detected by said detecting means (24) .

2. Characterizing system according to Claim 1, **characterized in that** said means (23) for obtaining the temporal sequence of pairs of images (PS1, PS2, PS3, PS4) in the low resolution consist of means for down-sampling images delivered by said first stereoscopic image-capturing system (20).

3. Characterizing system according to Claim 1, **characterized in that** said means (23) for obtaining the temporal sequence of pairs of images (PS1, PS2, PS3, PS4) in the low resolution consist of a low-resolution second stereoscopic image-capturing system (25).

4. Method for characterizing objects of interest present in a scene, said method comprising:
- a step E10 of capturing a temporal sequence of pairs of images (P1, P2, P3, P4) of an object of interest (10) present in said scene with a first stereoscopic image-capturing system,
- a step E80 of determining at least one region of interest (Z1, Z4) in at least one of the pairs of images captured in step E10,
- a step E90 of processing said or each region of interest thus determined in step E80 in order to characterize the object of interest corresponding thereto,
and further comprising:
- a step E20 of obtaining a temporal sequence of pairs of images (PS1, PS2, PS3, PS4) in a resolution, referred to as low resolution, lower than the resolution, referred to as high resolution, of the pairs of images (P1, P2, P3, P4) captured in step E10,
- a step E30 of detecting an object of interest (O1, O2, O3, O4) in each of the low-resolution pairs of images (PS1, PS2, PS3, PS4) and of determining coordinates of the objects of interest thus detected,
- a step E50 of determining that the objects of interest (O1, O2, O3, O4) detected in step E30 are representative of the same object by verifying the consistency in dimensions and in path between said detected objects of interest and of removing inconsistent detected objects of interest;
said step E80 determining said at least one region of interest only inside a sub-portion of the high-resolution pairs of images, said sub-portion corresponding to the coordinates of consistent objects of interest detected in step E50.

5. Characterizing method according to Claim 4, **characterized in that** step E80 consists in determining at least one region of interest inside a portion of at least two pairs of images among the images captured in step E10 that corresponds to each detected object of interest.

6. Characterizing method according to one of Claims 4 to 5, **characterized in that** it comprises a step E60 of estimating characteristics of detected objects and of sorting and removing objects depending on said characteristics.

7. Characterizing method according to one of Claims 4 to 6, **characterized in that** said step E20 consists in down-sampling images captured in step E10.

8. Characterizing method according to one of Claims 4 to 6, **characterized in that** the pairs of images in a low resolution are obtained (E20) by a low-resolution second stereoscopic image-capturing system.

9. Program written on a medium and intended to be loaded into a memory of a processing unit of a characterizing system according to one of Claims 1 to 3, said program comprising instructions or sections of code for implementing the steps of a method for characterizing an object of interest according to one of Claims 4 to 8, when said program is executed by said processing unit.
